# EUROPEAN PATENT APPLICATION

(11) **EP 3 166 102 A1**
(43) Date of publication of application: **10.05.2017**
(21) Application number: 16397532.9
(22) Date of filing: 04.11.2016
(51) Int. Cl.: G10H 1/00, G10H 1/46

(54) **A METHOD, A SYSTEM AND A COMPUTER PROGRAM FOR ADAPTING MEDIA CONTENT**

(30) Priority: 09.11.2015 US 201514935905
(71) Applicant: Aitokaiku Oy, 00520 Helsinki (FI)
(72) Inventor: Eerola, Jarno, 10437 Berlin (DE)
(74) Representative: Berggren Oy, Tampere

(57) **Abstract**

The present embodiments relate to a method and technical equipment for audio processing. The method comprises receiving a user input; determining an audio based on the user input; determining rules for adapting the audio based on the user input; receiving data from at least one data source; adapting the audio according to the received data from the at least one data source and according to the rules; generating a data stream comprising at least parameters on how the audio is adapted.

## Description

### Technical Field

The present application relates to a method, a system and a computer program product for adapting media content. In particular, the present application discloses a method, a system and a computer program product for adapting audio.

### Background

Today, personal (often also mobile) electronic devices have functionalities for capturing media content and for creating and/or adapting media content. In addition, the performance and communication capabilities of these devices make it possible to quickly process the data and to easily share the content between one or more other devices.

Typical example of media content is a picture taken by a mobile device. The captured picture can be modified by using various filters, by highlighting various elements in the picture, by adding textual or graphical content to the picture or by altering the content of the picture. The modified (personalized) content can then be shared to friend, to social media, to electronic picture gallery etc. via a communication network.

### Summary

The aim of the present application is to provide another solution for adapting media content. In particular, the embodiments relate to adaptation of music or other audio based on an environment.

Now there has been invented an improved method and technical equipment implementing the method. Various aspects of the invention include a method, an apparatus and a computer readable medium comprising a computer program stored therein, which are characterized by what is stated in the independent claims. Various embodiments of the invention are disclosed in the dependent claims.

According to a first aspect, there is provided a method for audio processing, the method comprises receiving a user input; determining an audio based on the user input; determining rules for adapting the audio based on the user input; receiving data from at least one data source; adapting the audio according to the received data from said at least one data source and according to said rules; generating a data stream comprising at least parameters on how the audio is adapted.

According to an embodiment of the first aspect, the parameters comprises at least one of the following: data values from said at least one data sources and rules for adapting the audio.

According to an embodiment of the first aspect, that can be combined with any of the previous embodiments, the method further comprises playing the audio samples relating to the received user input according to the parameters stored in the data stream.

According to an embodiment of the first aspect that can be combined with any of the previous embodiments, the method further comprises delivering the generated data stream to one or more other apparatuses.

According to an embodiment of the first aspect that can be combined with any of the previous embodiments, the at least one data source comprises one or more of the following: one or more sensors, one or more external devices, one or more online data sources being connectable via a communication network.

According to an embodiment of the first aspect that can be combined with any of the previous embodiments, the sensor is any of the following: a microphone, a camera, a global positioning system sensor, an accelerometer, a clock, a wearable sensor.

According to an embodiment of the first aspect that can be combined with any of the previous embodiments, the user input is any of the following: a selection of a theme on a user interface of the apparatus, a definition of a color on a user interface of the apparatus, an image being permanently or temporally stored in the apparatus.

According to an embodiment of the first aspect that can be combined with any of the previous embodiments, the rules is a configuration file comprising information on which audio samples relating to the received user input are played and how.

According to an embodiment of the first aspect that can be combined with any of the previous embodiments, the audio comprises one or more audio samples.

According to a second aspect, there is provided an apparatus comprising at least one processor, memory including computer program code, the memory and the computer program code configured to, with the at least one processor, cause the apparatus to perform at least the following: receive a user input; determine an audio based on the user input; determine rules for adapting the audio based on the user input; receive data from at least one data source; adapt the audio according to the received data from said at least one data source and according to said rules; generate a data stream comprising at least parameters on how the audio is adapted.

According to an embodiment of the second aspect, the parameters comprises at least one of the following: data values from said at least one data sources and rules for adapting the audio.

According to an embodiment of the second aspect, that can be combined with any of the previous embodiments, the apparatus further comprises a computer program to cause the apparatus to play the audio relating to the received user input according to the parameters stored in the data stream.

According to an embodiment of the second aspect that can be combined with any of the previous embodiments, the apparatus further comprises a computer program to cause the apparatus to deliver the generated data stream to one or more other apparatuses.

According to an embodiment of the second aspect that can be combined with any of the previous embodiments, the at least one data source comprises one or more of the following: one or more sensors, one or more external devices, one or more online data sources being connectable via a communication network.

According to an embodiment of the second aspect that can be combined with any of the previous embodiments, the sensor is any of the following: a microphone, a camera, a global positioning system sensor, an accelerometer, a clock, a wearable sensor.

According to an embodiment of the second aspect that can be combined with any of the previous embodiments, the user input is any of the following: a selection of a theme on a user interface of the apparatus, a definition of a color on a user interface of the apparatus, an image being permanently or temporally stored in the apparatus.

According to an embodiment of the second aspect that can be combined with any of the previous embodiments, the rules is a configuration file comprising information on which audio samples relating to the received user input are played and how.

According to an embodiment of the second aspect that can be combined with any of the previous embodiments, wherein the audio comprises one or more audio samples.

According to a second aspect, there is provided a computer program product embodied on a non-transitory computer readable medium, comprising computer program code configured to, when executed on at least one processor, cause an apparatus or a system to: receive a user input; determine an audio based on the user input; determine rules for adapting the audio based on the user input; receive data from at least one data source; adapt the audio according to the received data from said at least one data source and according to said rules; generate a data stream comprising at least parameters on how the audio is adapted.

### Description of the Drawings

In the following, various embodiments of the invention will be described in more detail with reference to the appended drawings, in which
- Fig. 1: shows an apparatus according to an embodiment as a simplified block chart;
- Fig. 2: shows a layout of an apparatus according to an embodiment;
- Fig. 3: shows a system according to an embodiment;
- Fig. 4: shows an audio processing application according to an embodiment;
- Fig. 5: shows an audio processing application according to another embodiment;
- Fig. 6: shows an example of a theme according to an embodiment;
- Fig. 7: shows an example of rules according to an embodiment;
- Fig. 8: shows an example of a playback of samples according to rules according to an embodiment;
- Fig. 9: shows an example of a first scenario of steraming audio without an audio processing application according to present embodiments;
- Fig. 10: shows an example of a second scenario of streaming audio, when a sending user has an audio processing application according to embodiments;
- Fig. 11: shows an example of a third scenario of streaming audio, when a sending user and a receiving users have audio processing applications according to embodiments;
- Fig. 12: shows another example of a scenario of streaming audio, when a sending user and a receiving users have audio processing applications according to embodiments; and
- Fig. 13: is a flowchart illustrating a method according to an embodiment.

### Description of Example Embodiments

In the following, several embodiments of the invention will be described in the context of an audio processing application which translates data in user's surroundings into music. The embodiments use data from e.g. smartphone sensors for transforming audio into a reactive personal music in real-time. The music being generated is unique, because it reacts to surroundings (motion, sounds, actions, colors, etc.) and devices (IoT devices (Internet of Things), wearables and fitness trackers, etc.) around the user. This means that when the surroundings or device output change, the music will be changed accordingly.

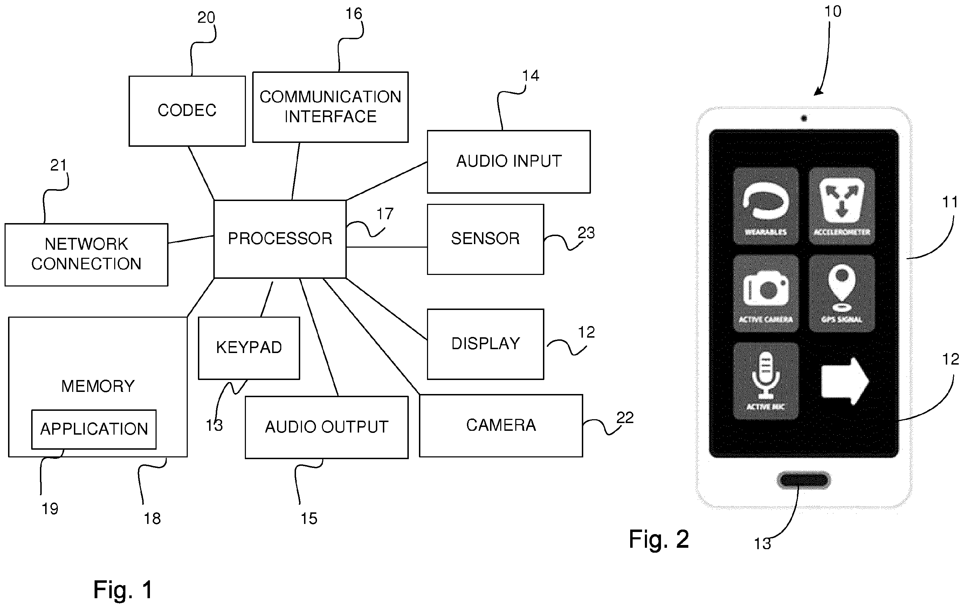

Figure 1 shows a block diagram of an apparatus according to an embodiment. Figure 2 shows a layout of an apparatus according to an embodiment. The elements of Figs. 1 and 2 will be explained next.

The apparatus 10 is an electronic device, for example a mobile terminal or user equipment of a wireless communication system. However, it would be appreciated that embodiments of the invention may be implemented within any electronic device or apparatus which are capable of audio processing.

The apparatus 10 may comprise a housing 11 for incorporating and protecting the apparatus 10. The apparatus 10 further may comprise a display 12 in the form of a liquid crystal display. In other embodiments of the invention the display 12 may be any suitable display technology. The apparatus 10 may further comprise a keypad 13. Instead or in addition, the apparatus may comprise any suitable data or user interface mechanism.

The apparatus 10 may comprise an audio input, e.g. a microphone 14. The audio input may be a digital or analogue signal input. The apparatus 10 may further comprise an audio output device 15. The apparatus 10 may further comprise a communication interface 16 to other devices, e.g. an infrared port for short range line of sight communication or any other suitable short range communication solution such as for example a Bluetooth wireless connection or a USB (Universal Serial Bus)/firewire wired connection.

The apparatus 10 may comprise a processor 17 for controlling the functions of the apparatus 10. The processor 17 may be connected to memory 18 which, in embodiments of the invention, may store both application(s) 19 (also comprising the audio processing application according to present embodiments) and data in the form of image and audio data and/or may also store instructions for implementation by the processor 17. The processor 17 may further be connected to a codec 20.

The apparatus 10 may further comprise a card reader and a smart card, for example a UICC (Universal Integrated Circuit Card) and UICC reader for providing user information and being suitable for providing authentication information for authentication and authorization of the user at a network.

The apparatus 10 may comprise network connection 21 connected to the processor 17 and suitable for generating wireless communication signals for example for communication with a cellular communications network, a wireless communications system or a wireless local area network.

The apparatus 10 may comprise a camera 22 capable of recording or detecting individual image frames. The camera 22 is capable of recording or capturing images and/or video.

The apparatus may comprise one or more sensors 23 to detect events or changes in the environment and for a corresponding output. Examples of a sensors are an accelerator, a heart rate sensor, a GPS sensor, a humidity sensor, a temperature sensor, an altimeter, etc.

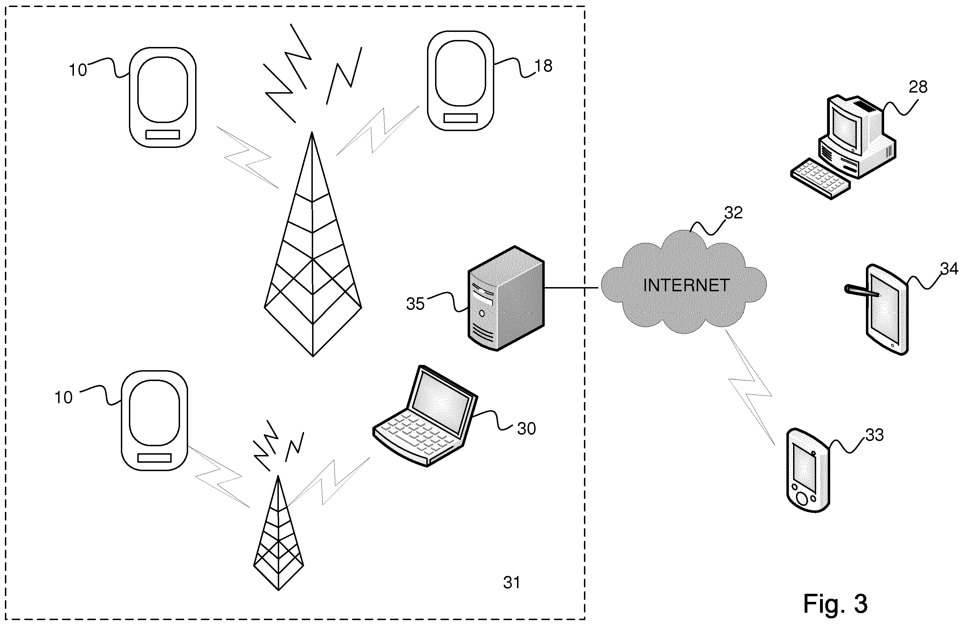

With respect to Figure 3, an example of a system within which embodiments of the present invention can be utilized is shown. The system comprises multiple communication devices which can communicate through one or more networks. The system may comprise any combination of wired or wireless networks including, but not limited to a wireless cellular telephone network, a wireless local area network (WLAN) such as defined by any of the IEEE 802.x standards, a Bluetooth personal area network, an Ethernet local area network, a token ring local area network, a wide area network, and the Internet.

The system may include both wired and wireless communication devices and/or apparatus 10 suitable for implementing embodiments of the invention.

For example, the system shown in Figure 3 shows a mobile telephone network 31 and a representation of the internet 32. Connectivity to the internet 32 may include, but is not limited to, long range wireless connections, short range wireless connections, and various wired connections including, but not limited to, telephone lines, cable lines, power lines, and similar communication pathways.

The example communication devices shown in the system may include, but are not limited to, an electronic device or apparatus 10, a combination of a personal digital assistant (PDA) and a mobile telephone 18, a PDA 34, an integrated messaging device (IMD), a desktop computer 28, a notebook computer, a laptop 30. The apparatus 10 may be stationary or mobile when carried by an individual who is moving. The apparatus 10 may also be located in a mode of transport including, but not limited to, a car, a truck, a taxi, a bus, a train, a boat, an airplane, a bicycle, a motorcycle or any similar suitable mode of transport.

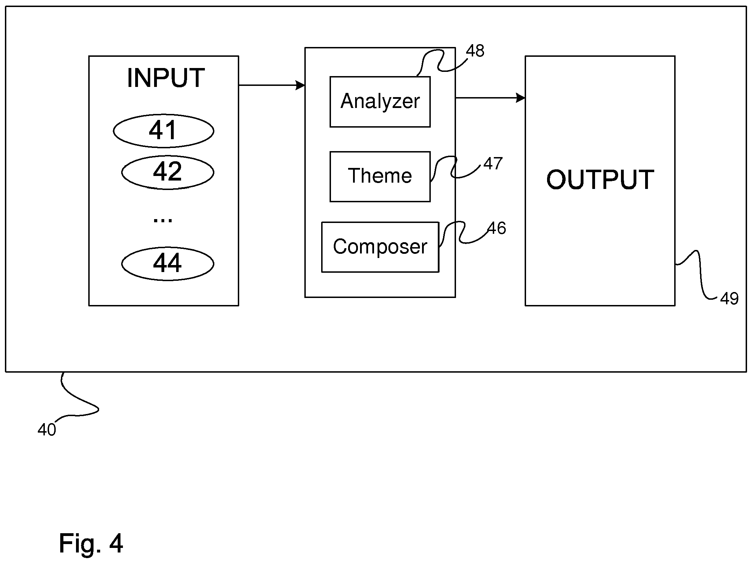

The present embodiments are described in a simplified manner with reference to Figure 4. For creating adapted (or personalized) audio content, an audio processing application 40 being stored in an apparatus takes, as input, data 41, 42, 44 from one or more internal sensors of the apparatus. The sensors may include any combination of the following: a microphone, a camera, a GPS, an accelerometer, a clock and/or any wearable sensors (e.g. heart rate monitor). In addition to aforementioned sensors, the audio processing application 40 may take as input online data from e.g. any web site, for example, real-time weather site, news site or a calendar etc. Therefore, the input data generally comprises one or more of the following: audio, video, any data from an apparatus, any data from external devices or services. An example of an external device is AR/VR glasses (augmented reality/virtual reality), providing visual data to the audio processing application.

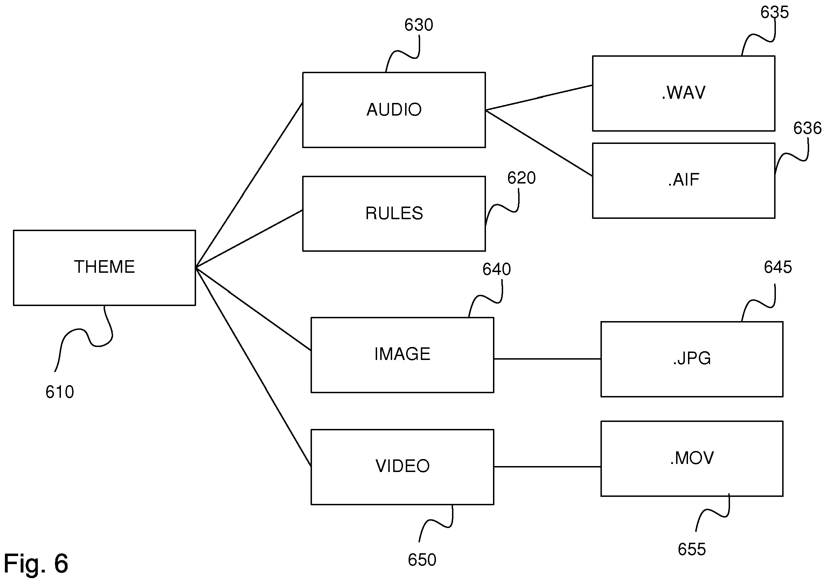

In addition to sensors and other external data, the audio processing application 40 is configured to determine the audio to be processed. This can be implemented e.g. by providing a set of images to a user on a display of the apparatus, wherein each of the images is a representation of a certain theme 47. The user may select an image that appears the most suitable for the user's current mood. Each of the themes is associated at least with a certain audio content (audio clips, sound elements, audio samples) to reflect the theme and a set of rules (i.e. configuration file) how the audio content is to be processed (i.e. how the input data is associated and interpreted with the sound and possibly also with the visual elements), but also alternatively additionally with either or both of the following: a theme related image, a theme related video (i.e. visual elements). Figure 6 illustrates an example of a theme with data being associated to it. As mentioned, a theme 610 is associated with at least rules 620 and audio 630. The theme 610 may also be associated with image 640 and/or video 650. The audio 630 may have, for example, any known audio format, e.g..wav 635 or .aif 636, but any future audio format as well. The image 640 may have, for example, any known image format, e.g..jpg 645, but any future image format as well. Also the video 650 may have, for example, any known video format, e.g..mov 655, but any future video format as well.

The visual data being associated with the theme may comprise visual components (pictures and/or video) that can be used in similar fashion as sound. Incoming data and rules define how they are used (movement, size, location). For example, when a user with an audio processing application according to embodiments is approaching to the user and this may be visually indicated by an approaching icon in the audio processing application. In addition, any video or image data from AR/VR glasses can be mixed with any other theme-related visual data.

The audio processing application may have a set of themes ready for the user, but the user may download more themes from a server. The audio processing application may also allow a user to generate his/her own themes, as will be described below, and to share them with other users.

As mentioned, the user may generate their own theme. This can be done e.g. by taking a picture of any object or view by a camera of the apparatus, wherein the colors of the picture control the selection of the audio content in a same way as the selection of the theme. For example, an image of a sea at night has dark colors with some small white areas (waves, stars). These two colors and their relationship may control the selection of audio so that the theme music to be selected may be slow and downbeat but also has some vibrant moments, for example.

Yet, as a further embodiment, the user may select only a color (instead of a theme) according to which the audio is determined. Instead, the user may simply press a button on a user interface, which launches the audio processing application to gather data from any available sensor and/or data source during a certain time period, e.g. 5 seconds. Based on the gathered data, the audio processing application is capable of selecting the audio and the adapting rules.

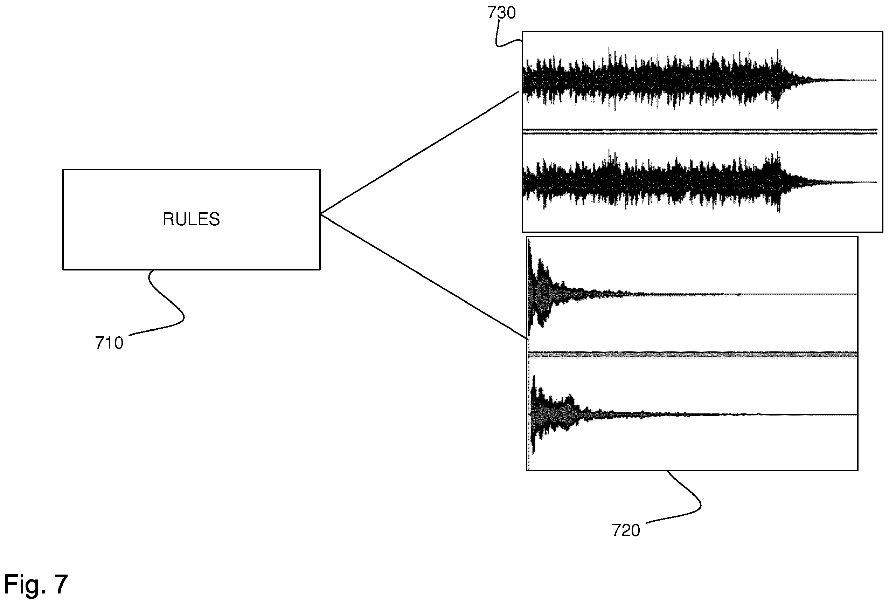

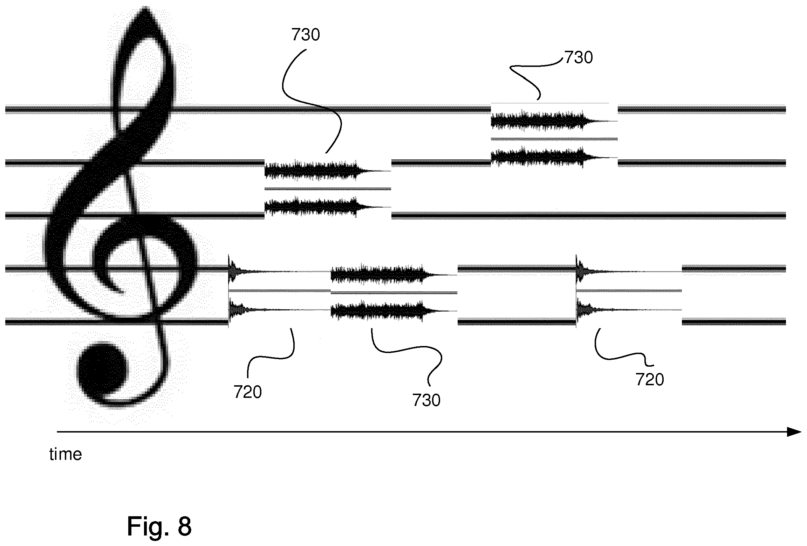

Let us turn again to Figure 4. After having determined the audio relating to the theme, the audio processing application 40 is configured to analyze 48 the input data to create effects to the audio according to the theme related rules. Figure 7 illustrates an example of the rules 710. As mentioned, rules 710 is a configuration file that describes which sample is played and how (pitch, volume, effects). For example, sample 720 can be configured to be played when a high pitch tone is received as an input. Figure 8 illustrates an example of including (adding) two samples "730" and "720" to the theme related audio. Rules may also include how to play an internal synthesizer (which key, chord play, tempo etc.), and the sum of these can be interpreted as a music band (guitar, piano, drums, etc.). The rules are configured to control the music that is theme related (e.g. jazz, rock, ambient) and to formulate the input(s) in a way that the music is comfortable for the user.

With the theme related audio and the effects relating to the input data, a composer 46 (Fig. 4) of the audio processing application 40 creates an audio and/ or a data stream to be output 49 from the audio processing application 40 and from the apparatus. The audio being created is generated of samples relating to the determined theme and by a synthesizer and any effects relating to the input. This means that the input stream (e.g. sensor data) being converted to the audio processing application readable format will interact with the rules in order to form the audio processing application specific data stream, which has the real-time input and the instructions on how the music should be composed. Rules and theme also include information on how to add effects (echo, delay, etc.). If video/image data is received from AR/VR glasses by the audio processing application, this data can be mixed with other visual elements being provided by the audio processing application.

The data stream being generated is the main controller of the audio and is read by the processor(s), which are then able to play the samples, synthesizer and visual data accordingly in real time. If the user wishes to stream or share his/her music with one or more receiving apparatuses, s/he needs to stream only the data stream assuming the receiving apparatus(es) has also the audio processing application according to the present embodiments. The audio processing application of the receiving apparatus will read the data stream and compose the music an visuals locally in real-time, which makes the quality equal to the original at the fraction of data cost. If the receiving apparatus does not have the audio processing application, s/he can receive the music as standard audio stream.

The audio being played in adapted manner from the audio processing application is delivered to e.g. the speakers of the apparatus so that the user is able to listen to the audio in real time. Instead or in addition, the audio can be stored as an audio file or only as a data stream file.

The music may be played locally with samples and synthesizer. The audio processing application generates an application specific data stream format that is the output of the audio processing application. The application specific data stream format of this embodiments can be transported over the network to another corresponding audio processing application. If the receiving user does not have the audio processing application of the present embodiments s/he can listen the audio via standard audio stream.

When both of the apparatuses comprise the audio processing applications, the data stream to be delivered between the apparatuses will have a minimal size compared to if an audio stream was delivered. This is because the data stream being delivered may comprise only information on the theme, on the sensor values and rules for adapting the theme related audio. The data stream is read in the receiving apparatus (i.e. the apparatus receiving the data stream from another device, i.e. sending device). Based on the data stream, the receiving apparatus is able generate the adapted audio, i.e. to adapt the audio by itself. This makes it possible to play the audio in adapted manner in both ends (i.e. in sending apparatus and in receiving apparatus) at almost the same time (possible delays relate to the network connection between the devices). It is understood that the streaming of the configuration data does not require any audio processing, whereby the quality of the audio is not negatively affected.

When the user of the receiving apparatus wishes to listen to the audio being generated by the user of the sending apparatus, the sensor data of the receiving apparatus does not affect to the audio. However, when the users of both devices wish to generate adapted audio together (regardless of the location of the apparatuses), the sensor data and themes of both apparatuses will affect to the shared audio.

If the receiving apparatus does not have the audio processing application according to the embodiments, also the audio needs to be delivered in the data stream, or the audio needs to be downloaded from the server.

The audio processing application is stored in a memory of the apparatus. The audio processing application may also be downloadable from a server to the apparatus, or the audio processing application may initially exist in the apparatus. The audio processing application is configured to receive the input data, and to process the theme audio according to the input data. The audio processing application comprises a database comprising audio relating to various themes. The database may be updated with more themes from a server. User data and preferences may be stored on a server in addition to the audio processing application.

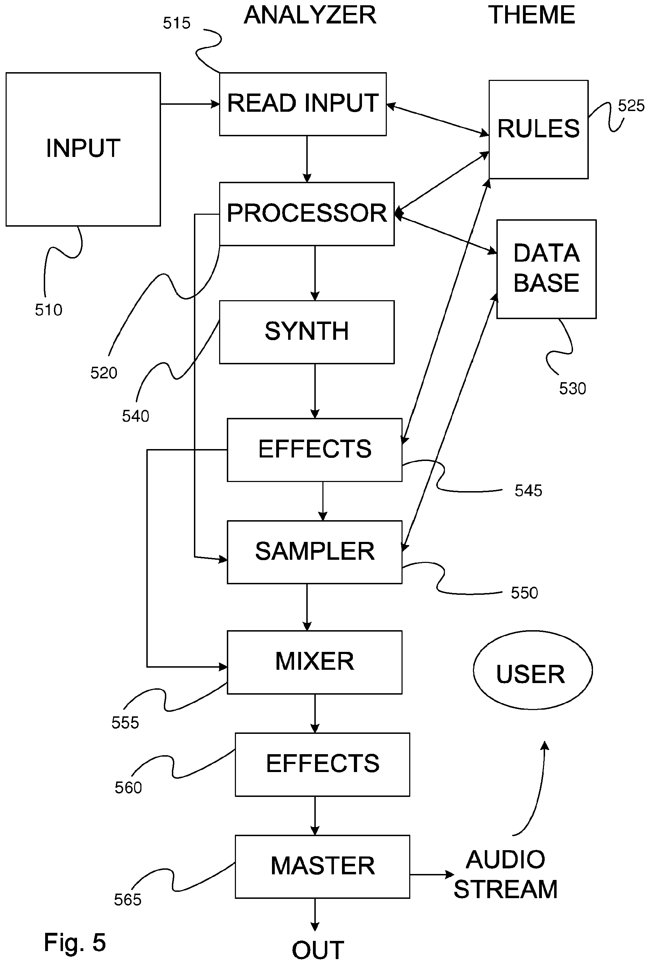

Figure 5 illustrates another embodiment of the audio processing application. The audio processing application comprises an input 510 and means for reading 515 the input. The input is processed by the processor 520 to determine a theme, rules 525 from a database 530. The audio is generated of samples by a synthesizer 540 and any effects 545 relating to the input. A sampler 550 uses sound samples to compose music. A mixer 555 creates the real-time music with effects 560. The audio processing application also comprises a master 565 for storing the final mix of audio from the mixer 555 with effects 560. The audio processing application may output the generated data stream, and/or play the adapted audio stream to the user.

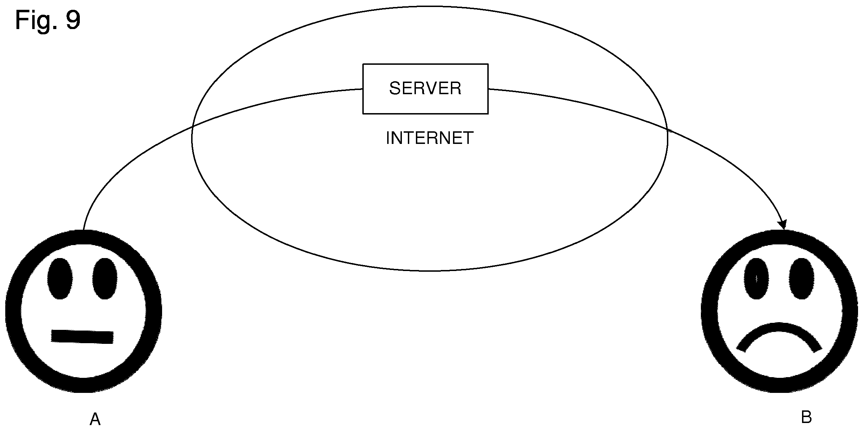

Figures 9-12 represent various scenarios, where a user A wishes to send music to user B. In the first scenario, both users have normal smartphones without the audio processing application according to embodiments. In the second scenario, user A has an audio processing application according to present embodiments. In the third and fourth example, both users have the audio processing application according to present embodiments.

Figure 9 illustrates the first scenario, where both users A, B have conventional smartphones without an audio processing application according to the present embodiments. In this scenario, user A has a smartphone with music. The user A has to upload or stream (up) the music via a server. The users B has to download or stream (down) the music from the server. In this scenario, there is a high data net use, but the quality of the audio is low. In addition, royalty issues may block the service.

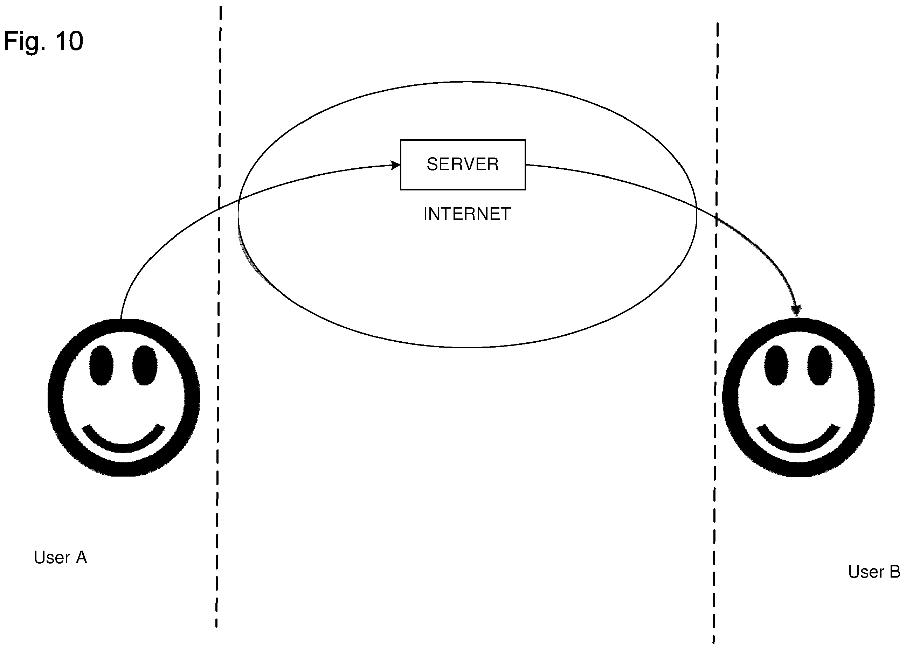

Figure 10 represents the second scenario, where a user A has a smartphone with the audio processing application according to present embodiments. The user A streams the data stream according to an embodiment to a server. The network usage for the user A is low, and the audio quality is good. In addition, there is not royalty issues that could block the server. The user B can download the audio with the data stream (i.e. data how to adapt the audio stream) to her/his smartphone.

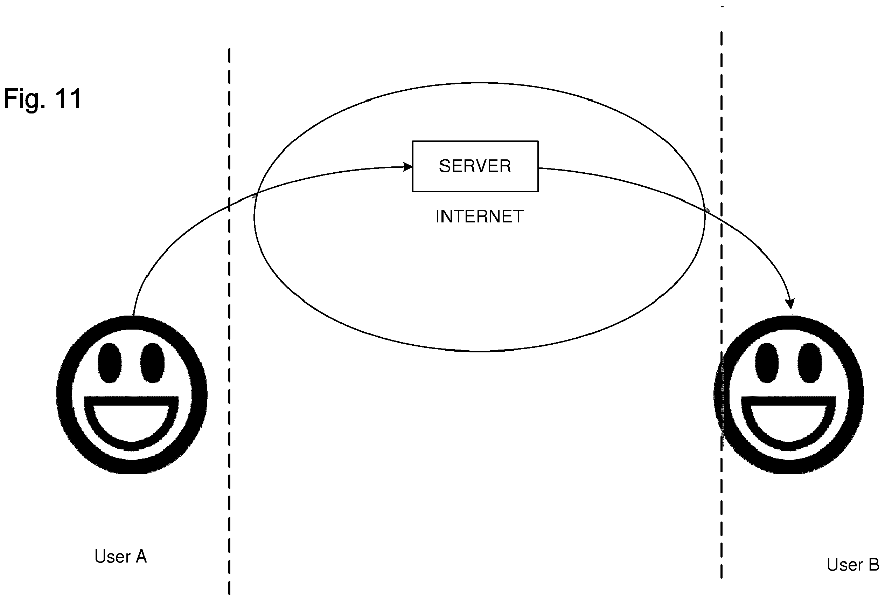

Figure 11 illustrates the third scenario, where both users have smartphones with an audio processing application according to present embodiments. In this scenario user A streams the data stream according to an embodiment to a server, and user B streams the data stream according to an embodiment from the server. The audio processing application being stored on an apparatus of the user B is capable of generating the adapted audio based on the data stream and the audio that is retrieved from the database of the apparatus of the user B. There is a low network usage for both, and the audio quality corresponds the original. There is no royalty issues to be solved.

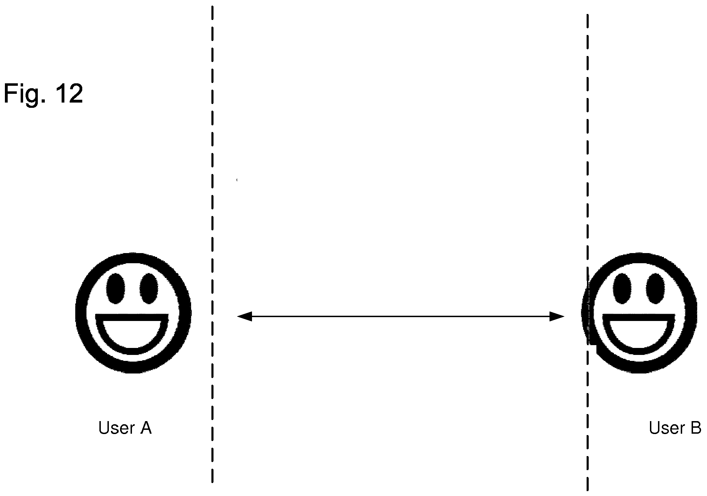

Figure 12 illustrates a further scenario, where the communication is directly between the user apparatuses, without a server connection. The communication can be implemented via Bluetooth, Wifi or via any device-to-device communication method. In this scenario, the data stream (comprising information, i.e. parameters (e.g. themes, rules, sensor values) on how to adapt the audio) is directly shared between users A and B. Both apparatuses are capable of adapting the audio by the data stream and play the adapted audio locally.

The present embodiments are further described by means of use cases.

### Use case 1:

A user is going to go for jogging. S/he selects a theme from an audio processing application being stored on her/his mobile electronic device. Selectable themes are shown on a display of the apparatus, on a user interface of the audio processing application, with figures or with textual description. In this embodiment, the themes are represented with figures "spring", "rose", "waves", "dark forest", "leopard" and "car". The user selects theme "leopard" to describe her/his feelings for the run.

In the audio processing application, the theme "leopard" may comprise a set of theme related sounds or a theme song. The theme may also comprise a set of theme related pictures.

During jogging, the audio processing application being stored in the apparatus receives as an input data at least on the one or more of the following: the user's movement, the user's heart rate, user's surroundings (e.g. weather, lightness, online data), external devices (e.g. internet of things). In addition to the input data, the audio processing application uses the theme and the composition rules together with the user preferences to determine the audio content to be output. The theme related composition rules may comprise e.g. rule to lower the curves appearing in the audio, or to highlight the high notes.

The audio is produced by a synthesizer and the effects of the audio processing application using the sample tones relating to the theme.

The audio adaptation is implemented nearly real-time (the input is received "real-time", and the audio is adapted as soon as the input is received). Right after the audio adaptation has started, the audio is output. The user may listen to the audio from the apparatus by using known means, i.e. loudspeaker of the apparatus, wired or wireless headphones, wired or wireless earphones, wired or wireless ear buds, wired or wireless headset, etc. The audio will change over time, for example due to changing conditions in the surroundings (weather changes, lighting changes, changes in user's speed, changes in environment's noise, etc.).

It is to be noticed that no network connection is needed for creating the audio. The themes are stored in the audio processing application, and the audio processing application comprises all the means needed for adaptation. If the user wishes to add new themes to the audio processing application, the new themes are downloaded from the server with corresponding sample tones. Also, a network connection is needed if the user wishes to share the adapted audio to another user(s), to social media or to stream the adapted audio to another device.

### Use case 2:

A user is paddling and at the same time s/he is listening audio being generated by the audio processing application of the embodiments. Suddenly a flight of seagulls approaches the user, and their singing activates the audio processing application to adapt the audio being played by adding a new instrument to the existing audio.

The generated audio with the new instrument and the scenery around the user motivates the user to share the moment.

For sharing, the user is able to record the adapted audio (either in one or more parts or completely). After recording, the user may decide whether to share the recording or to save the recording to the memory of the apparatus.

Instead of or in addition to the recording, the user may continue playing the audio. During playing, the user may login to a social media application (e.g. Instagram™, Vine™, etc.) in order to capture and create a piece of video, into which an adapted audio of the present embodiments will be added. The soundtrack of the video will then be formed of the adapted audio received from the audio processing application and any sound being captured from the environment (through a microphone). In some situations, the microphone input can be blocked.

### Use case 3:

The third use case is a sports-related use case. A user has an apparatus that reads data on user's heart-rate (BPM), on the surrounding weather (temperature, rain, cloudiness) and on the surrounding background noise (city sounds, cars etc.). If the user has allowed the audio processing application to access this information, the audio processing application reads the input streams and merges them to a single data stream format (internal) that can be used to compose the audio output. The processor of the apparatus will access this stream and the rules of the chosen theme.

As mentioned, the purposes of the rules are to control the audio that relates to the theme (e.g. jazz, rock, ambient) and formulates the input(s) in way that the music is comfortable for the user. This means that e.g. if the user decides to stop with the sports, the music may not slow down to zero instantly. There may be a transition phase that keeps the responsiveness in the music but also keep the content enjoyable. This can be also supported by the effects like reverb.

The audio processing application can be also exclusively integrated with any external device, e.g. heart-rate monitor, the data from which is only used for adaptation. For example, the audio processing application can control the music tempo based on user heart-rate. It can also communicate with the heart-rate application where user can set his/her training time. By reading this training time from the heart-rate application, the audio processing application is able to keep the tempo up until the user has achieved his/her goal and then drop the tempo to recovery mode for stretch and calm down.

### Use case 4:

In an event with thousands of users and multiple rooms, the audio processing application can be used in an interesting way. The audio processing application or multiple audio processing applications located in different parts of the venue can read multiple data sources (sound, light, movement and data from external devices e.g. brain data reader or room temperature) and compose the music as described above. When multiple audio processing applications are in use they can be synchronized via Internet, WiFi or Bluetooth (basically any network supported by the device), and thus to produce audio that is adapted according to data from multiple audio processing applications.

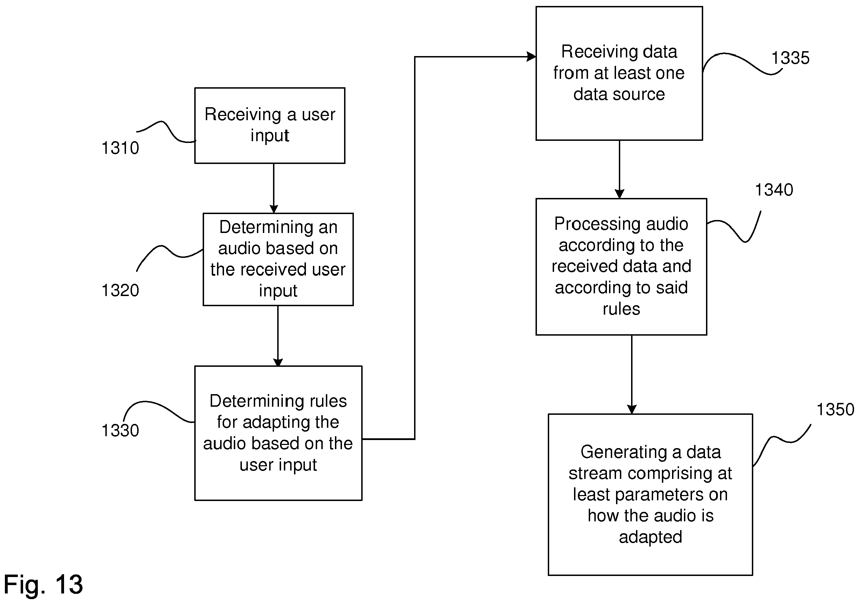

The method according to an embodiment is illustrated as a flowchart in Figure 13. The method comprises at least receiving 1310 a user input; determining 1320 an audio based on the user input; determining 1330 rules for adapting the audio based on the user input; receiving 1335 data from at least one data source; adapting 1340 the audio according to the received data from said at least one data source and according to said rules; generating 1350 a data stream comprising at least parameters on how the audio is adapted.

In the previous, the audio processing application has been described as being stored in an apparatus. In some embodiments, the audio processing application may be stored only in a server. The server may obtain data (e.g. sensor data or any other data) from one or more client apparatuses, and then generate a piece of adapted audio based on the data from multiple client apparatuses. The distance between any two apparatuses may be short (e.g. in the same or neighboring service cell of a mobile network) or long.

In addition, in the previous, the receiving apparatus has been defined to be an electronic device, such as an smartphone. However, it is appreciated that the receiving apparatus may be any electronic device capable of playing audio and - in some embodiments also - displaying video and/or image, or is connectable to such device. Examples of such devices are television, set-top-box, play console, augmented reality (AR) or virtual reality (VR) glasses, etc.

The various embodiments of the invention can be implemented with the help of computer program code that resides in a memory and causes the relevant apparatuses to carry out the invention. The computer program product may be embodied on a non-transitory computer readable medium. As an example, a device may comprise circuitry and electronics for handling, receiving and transmitting data, computer program code in a memory, and a processor that, when running the computer program code comprising computer instructions, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

The apparatus according to the embodiments may comprise means for receiving a user input; means for determining an audio based on the user input; means of determining rules for adapting the audio based on the user input; means for receiving data from at least one data source; means for adapting the audio according to the received data from said at least one data source and according to said rules; and means generating a data stream comprising at least parameters on how the audio is adapted.

It is apparent that the present invention is not limited solely to the above-presented embodiments, but it can be modified within the scope of the appended claims.

## Claims

1. A method for audio processing, the method comprises
- receiving a user input;
- determining an audio based on the user input;
- determining rules for adapting the audio based on the user input;
- receiving data from at least one data source;
- adapting the audio according to the received data from said at least one data source and according to said rules; and
- generating a data stream comprising at least parameters on how the audio is adapted.

2. The method according to claim 1, wherein the parameters comprise at least one of the following: data values from said at least one data sources and rules for adapting the audio.

3. The method according to claim 1 or 2, further comprising playing the audio relating to the received user input according to the parameters stored in the data stream.

4. The method according to claim 1 or 2 or 3, further comprising delivering the generated data stream to one or more other apparatuses.

5. The method according to any of the preceding claims 1 to 4, wherein the at least one data source comprises one or more of the following: one or more sensors, one or more external devices, one or more online data sources being connectable via a communication network.

6. The method according to claim 5, wherein the one or more sensors is any of the following: a microphone, a camera, a global positioning system sensor, an accelerometer, a clock, a wearable sensor.

7. The method according to any of the preceding claims 1 to 6, wherein the user input is any of the following: a selection of a theme on a user interface of the apparatus, a definition of a color on a user interface of the apparatus, an image being permanently or temporally stored in the apparatus.

8. The method according to any of the preceding claims 1 to 7, wherein the rules are a configuration file comprising information on which audio samples relating to the received user input are played and how.

9. The method according to any of the preceding claims 1 to 8, wherein the audio comprises one or more audio samples.

10. An apparatus comprising at least one processor, memory including computer program code, the memory and the computer program code configured to, with the at least one processor, cause the apparatus to perform at least the following:
- receive a user input;
- determine an audio based on the user input;
- determine rules for adapting the audio based on the user input;
- receive data from at least one data source;
- adapt the audio according to the received data from said at least one data source and according to said rules; and
- generate a data stream comprising at least parameters on how the audio is adapted.

11. The apparatus according to claim 10, wherein the parameters comprises at least one of the following: data values from said at least one data sources and rules for adapting the audio.

12. The apparatus according to claim 10 or 11, further comprising a computer program to cause the apparatus to play the audio relating to the received user input according to the parameters stored in the data stream.

13. The apparatus according to claim 10 or 11 or 12, further comprising a computer program to cause the apparatus to deliver the generated data stream to one or more other apparatuses.

14. The apparatus according to any of the preceding claims 10 to 13, wherein the at least one data source comprises one or more of the following: one or more sensors, one or more external devices, one or more online data sources being connectable via a communication network.

15. A computer program product embodied on a non-transitory computer readable medium, comprising computer program code configured to, when executed on at least one processor, cause an apparatus or a system to:
- receive a user input;
- determine an audio based on the user input;
- determine rules for adapting the audio based on the user input;
- receive data from at least one data source;
- adapt the audio according to the received data from said at least one data source and according to said rules; and
- generate a data stream comprising at least parameters on how the audio is adapted.
